# EUROPÄISCHE PATENTSCHRIFT

(11) **EP 1 042 142 B1**
(45) Veröffentlichungstag und Bekanntmachung des Hinweises auf die Patenterteilung: **19.11.2003**
(21) Anmeldenummer: 98966809.0
(22) Anmeldetag: 21.12.1998
(51) Int. Cl.: B60R 21/20

(54) **AIRBAGMODUL, INSBESONDERE BEIFAHRERAIRBAGMODUL, MIT ABDECKKAPPE**
AIRBAG MODULE, ESPECIALLY A PASSENGER AIRBAG MODULE, WITH A COVER PLATE
MODULE D'AIRBAG, NOTAMMENT MODULE D'AIRBAG POUR PASSAGER, COMPORTANT UN ELEMENT DE RECOUVREMENT

(30) Priorität: 22.12.1997 DE 29723034 U
(43) Veröffentlichungstag der Anmeldung: 11.10.2000
(73) Patentinhaber: Takata-Petri AG, 63743 Aschaffenburg (DE)
(72) Erfinder: SAKAGUCHI, Takashi, D-63776 Mömbris (DE)
(74) Vertreter: Müller, Wolfram Hubertus, Dipl.-Phys.
(86) Internationale Anmeldenummer: DE9803796
(87) Internationale Veröffentlichungsnummer: WO99032333

(56) Entgegenhaltungen:
- EP-A- 0 739 788
- US-A- 5 303 951
- US-A- 5 482 313

## Beschreibung

Die Erfindung betrifft ein Airbagmodul, insbesondere Beifahrerairbagmodul, mit Abdeckkappe nach dem Oberbegriff des Anspruchs 1. Ein derartiges Airbagmodul ist aus der EP-A-0 739 788 bekannt.

Aus der US 5 482 313 ist eine Abdeckkappe für ein Beifahrerairbagmodul bekannt. Diese Kappe ist als gesondertes Teil in einer Öffnung der Instrumententafel vorgesehen, unter der sich das Gehäuse des Airbagmoduls befindet. Im oberen Bereich des Gehäuses sind Haken vorgesehen, die in Öffnungen elastischer Zungen der Abdeckkappe eingreifen. Weiterhin sind an der Abdeckkappe Klauen vorhanden, die im Bereich der Öffnung unter die Instrumententafel greifen, so daß die Abdeckkappe arretiert ist. Diese Befestigungsart ermöglicht in geringem Maße eine seitliche Bewegung der Abdeckkappe. Im Crashfall wird die Abdeckkappe aufgerissen, ohne daß die Instrumententafel beschädigt wird.

Weiterhin ist aus der japanischen Offenlegungsschrift 7-117609 ein Beifahrerairbagmodul bekannt, das Einrastmittel am Gehäuse aufweist, die in Ausschnitte an Seitenwänden einer Abdeckkappe eingreifen. Dadurch ist in bestimmten Grenzen eine Bewegung der Abdeckkappe bezüglich des Gehäuses möglich.

Durch diese vorgenannten Arten der Befestigung einer von der Armaturentafel getrennten Abdeckkappe wird die Abstimmung der Anlagefläche zwischen Armaturentafel und Beifahrerairbagmodulabdeckkappe bei der Montage des Beifahrerairbagmoduls erleichtert. Andererseits besteht der Nachteil, daß sich die Abdeckkappe auch nach der Montage des Airbagmoduls infolge des zwischen der Abdeckkappe und der Armaturentafel vorhandenen Spaltes leicht bewegen kann, wodurch Klappergeräusche verursacht werden können.

Weiterhin ist aus der EP-A 0 739 788 eine Abdeckung für ein Airbagmodul bekannt, bei der zwei Einrastmittel vorgesehen sind. Als erste Einrastmittel sind elastische Vorsprünge an Seitenwänden der Abdeckung vorgesehen, die unter die Instrumententafel greifen. Die Abdeckung liegt mit ihrem Rand ohne lateralem Spiel in einer Vertiefung der Instrumententafel und ist dort festgehalten. Die Seitenwände der Abdekkung weisen Durchbrüche auf, in die als zweite Einrastmittel Haken des Airbaggehäuses eingreifen. Die Durchbrüche sind wesentlich größer als die Haken, so daß die Abdeckkappe nach der Montage des Airbaggehäuses sowohl in senkrechter Richtung als auch in lateraler Richtung gegenüber dem Gehäuse verschiebbar ist. Da die Abdeckkappe aber genau in die vorgesehene Vertiefung der Instrumententafel passen muß, ist sie mit geringen Toleranzen zu fertigen.

Der Erfindung liegt die Aufgabe zugrunde, die Abdeckkappe und das Gehäuse des Airbagmoduls so auszubilden, daß die Abdeckkappe für die Montage des Airbagmoduls ausreichend beweglich ist, aber nicht mit engen Toleranzen gefertigt werden muß.

Erfindungsgemäß wird das gemäß den Merkmalen des Anspruchs 1 erreicht.

Bei einem Airbagmodul insbesondere Beifahrerairbagmodul, mit Modulgehäuse und Abdeckkappe mit mindestens einer Seitenwand, wobei die Abdeckkappe ein gesondertes Bauteil darstellt, das auf einem umgebenden Bauteil aufliegt, wobei zwei Einrastmittel angeordnet sind, wobei ein erstes, eine Relativbewegung der Abdeckkappe gegenüber dem umgebenden Bauteil erlaubendes Einrastmittel und ein zweites eine Relativbewegung der Abdeckkappe gegenüber dem Modulgehäuse erlaubendes Einrastmittel vorgesehen sind, weist die Abdeckkappe für ihre Beweglichkeit senkrecht bezüglich des umgebenden Bauteils nach dem Einrasten auf diesem aufliegende flexible Zungen und flexible erste Einrastmittel auf und die zweiten Einrastmittel und das Modulgehäuse sind so ausgebildet, daß eine Bewegung nach dem Einrasten zwischen der Seitenwand der Abdeckkappe und dem Modulgehäuse in der Lateralrichtung und in der Fahrtrichtung möglich ist.

Die Anzahl der Freiheitsgrade jedes Einrastmittels beträgt höchstens zwei. Das bedeutet daß die ersten Einrastmittel nach dem Einrasten eine senkrechte aber keine seitliche Bewegung der Abdeckkappe zulassen. Anderseits lassen die Zweiten Einrastmittel nur eine seitliche Bewegung zu.

Es ist zweckmäßig, als erste Einrastmittel elastisch verformbare Rasthaken vorzusehen, die unter das umgebende Bauteil des Kfz greifen, und als zweite Einrastmittel sollten Bolzen am Gehäuse des Airbagmoduls vorgesehen sein, die in Langlöcher in der Seitenwand der Abdeckkappe eingreifen.

Die Rasthaken sind vorzugsweise umlaufend an der Abdeckkappe angeordnet und der Freiraum zwischen den Rasthaken und der Abdeckkappe ist so groß, daß die Abdeckkappe spielfrei am umgebenden Bauteil des Kfz geführt ist. Hierbei erfordert die Spielfreiheit wegen der Elastizität der Rasthaken keine hohe Fertigungsgenauigkeit der Abdeckkappe.

Es ist zweckmäßig, daß bei Anordnung der Abdeckkappe auf der Armaturentafel eines Kfz die Rasthaken an den quer zur Fahrtrichtung verlaufenden Seiten der Abdeckkappe steifer sind als die Rasthaken an den in Fahrtrichtung verlaufenden Seiten der Abdeckkappe. Dadurch wird erreicht, daß eine aufgrund der erfindungsgemäßen Anordnung noch möglichen Verschiebung der Abdeckkappe in Fahrtrichtung nach der Montage des Airbagmoduls entgegengewirkt wird.

Zusätzlich kann der Verschiebung dadurch entgegengewirkt werden, daß die Rasthaken angerauhte Kontaktflächen aufweisen und/oder daß sie Buckel oder Rippen aufweisen.

Bei einer von der Rechteckform abweichenden Abdeckkappe weist die für den Austritt des Airbags vorgesehene Öffnung der umgebenden Baugruppe zweckmäßig parallel gegenüberliegende Ränder auf, deren Abstand abschnittsweise unterschiedlich ist und denen im entsprechenden Abstand abschnittsweise die Rasthaken gegenüberliegen.

Die Erfindung soll in Ausführungsbeispielen anhand von Zeichnungen (Figuren 8-10) erläutert werden. Bei den Figuren 1-7 handelt es sich nicht um Ausführungsarten der Erfindung. Es zeigen:
- Fig. 1: einen Querschnitt durch **ein Airbagmodul** mit Abdeckkappe,
- Fig. 2: einen Längsschnitt durch einen Abschnitt des Airbagmoduls;
- Fig. 3: eine perspektivische Ansicht einer Abdeckkappe ohne Darstellung ihrer Seitenwände;
- Fig. 4: eine vergrößerte Darstellung eines Hakens, der an einer in Fahrtrichtung verlaufenden Seite der Abdeckkappe angeordnet ist;
- Fig. 5: eine vergrößerte Darstellung eines Hakens, der an einer quer zur Fahrtrichtung verlaufenden Seite der Abdeckkappe angeordnet ist;
- Fig. 6: die Ausführungsform eines Hakens mit auf der Kontaktfläche angeordneten Rippen;
- Fig. 7: einen Ausschnitt aus einer Armaturentafel;
- Fig. 8: einen Querschnitt durch ein **erfindungsgemäßes** Airbagmodul mit Abdeckkappe;
- Fig. 9: einen Längssschnitt durch einen Abschnitt des Airbagmoduls nach Fig. 8;
- Fig. 10: einen Schnitt durch den Rand der Abdeckkappe;
- Fig. 11: den im Eingriff mit dem Rand der Armaturentafel befindlichen Rand der Abdeckkappe in Normallage;
- Fig. 12: den im Eingriff mit dem Rand der Armaturentafel befindlichen Rand der Abdeckkappe in angehobener Lage.

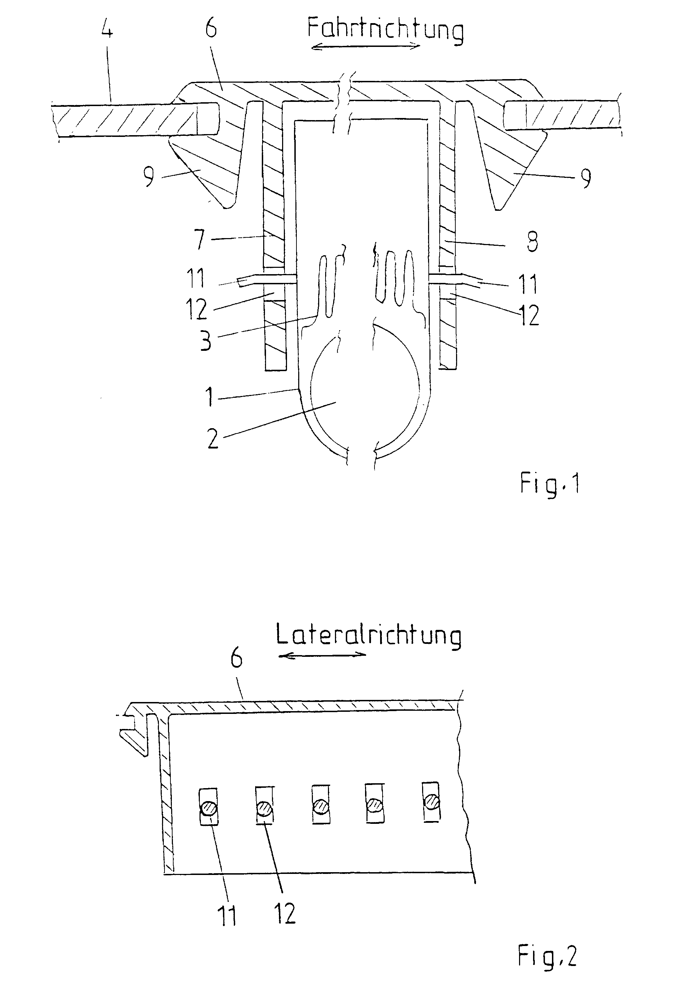

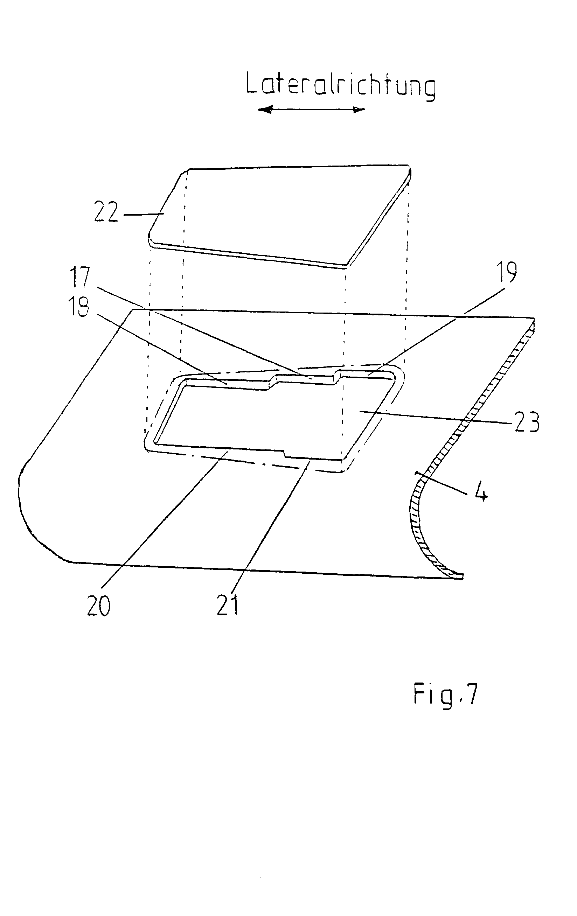

Ein Gehäuse 1 eines Airbagmoduls mit einem darin angeordneten Gasgenerator 2 und einem Gassack 3 ist unterhalb einer Armaturentafel 4 angeordnet. Eine in der Armaturentafel vorgesehene Öffnung 5 (Fig. 7) für den Austritt des Gassacks ist durch eine Abdeckkappe 6 verschlossen, die Seitenwände aufweist, von denen in der Fig. 1 zwei gegenüberliegende Seitenwände 7, 8 erkennbar sind.

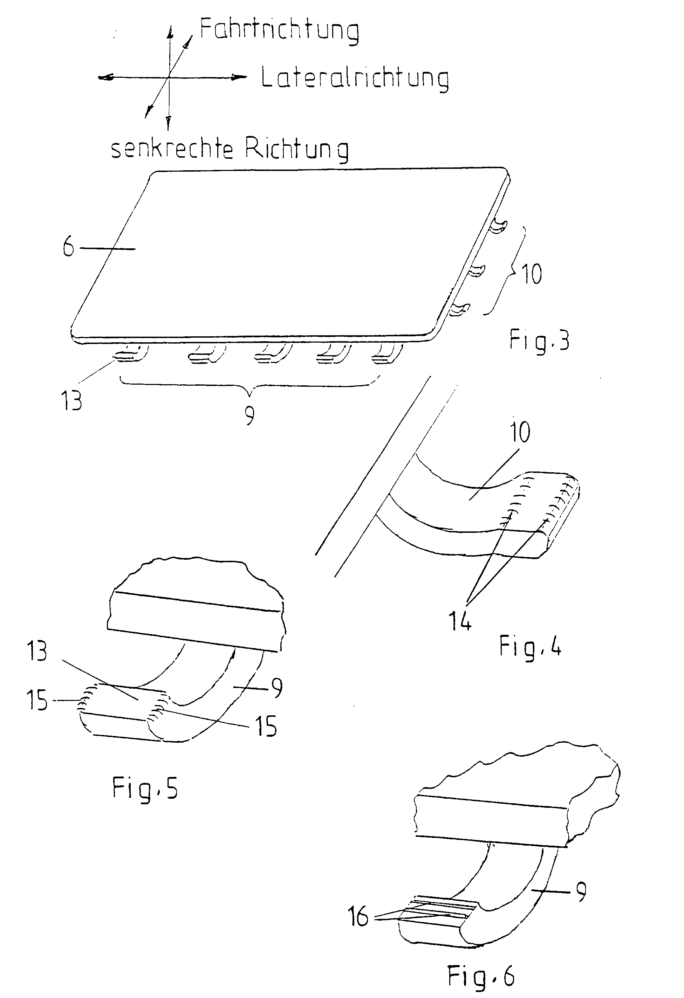

Die Abdeckkappe 6 weist Rasthaken 9, 10 auf, von denen in der Fig. 1 nur Rasthaken 9 an den quer zur Fahrtrichtung verlaufenden Seiten der Abdeckkappe und in der Fig. 3 die Rasthaken 9 und 10 an jeweils einer Seite der Abdeckkappe erkennbar sind. Die Kontaktfläche der Rasthaken ist ausreichend breit, um die Bewegung der Abdeckkappe in Lateralrichtung und in Fahrtrichtung des Kfz zu ermöglichen. Der Abstand der Rasthaken 9, 10 zur Unterseite der Abdeckkappe ist so bemessen, daß der Rand der Armaturentafel 4 spielfrei zwischen beiden liegt. Damit kann sich die Abdeckkappe nach dem Einrasten an der Armaturentafel in senkrechter Richtung nicht mehr bewegen.

Das Gehäuse 1 des Airbagmoduls weist Bolzen 11 auf, die in Langlöcher 12 des Gehäuses 1 eingreifen. Die Langlöcher erstrecken sich in Richtung der Abdeckkappe 6 und sind so breit, daß sich die Bolzen ohne seitliches Spiel bewegen können.

Bei der Montage des Airbagmoduls kann dieser von oben mit der bereits befestigten Abdeckkappe in die Armaturentafel eingeführt werden. Bei Aufdrücken der Abdeckkappe auf die Armaturentafel verformen sich die Rasthaken 9, 10 elastisch und greifen dann unter die Armaturentafel. Bei der anschließenden Befestigung des Gehäuses 1 am Kfz kann dieses wegen der Langlöcher 12 leicht angehoben und durch seitliches Verschieben in die richtige Position gebracht werden. wegen der Ausbildung der Abdeckkappe kann das Gehäuse sowohl in lateraler als auch in Fahrtrichtung verschoben werden, wobei die Beweglichkeit in Fahrtrichtung mit geringerer Kraft möglich ist als in Lateralrichtung.

Nach der Befestigung des Gehäuses ist eine Verschiebung der Abdeckkappe in lateraler Richtung wegen der spielfreien Lagerung der Bolzen 11 in den Langlöchern nicht mehr möglich. Dagegen kann sich die Abdeckkappe in Fahrtrichtung wegen der möglichen Bewegung der Bolzen in den Langlöchern in dieser Richtung bewegen. Nach der Montage des Gehäuses ist eine solche Bewegung aber unerwünscht. Deshalb sind die Rasthaken 9, die der Bewegung in Fahrtrichtung entgegenwirken, steifer ausgeführt als die Rasthaken 10, die in lateraler Richtung wirken. Weiterhin sind die Kontaktflächen 13 der Rasthaken 9 angerauht. Damit sind die in Fahrtrichtung sowie in senkrechter Richtung wirkenden Rastkräfte größer als die in Lateralrichtung wirkenden Rastkräfte.

Aus den Figuren 4 und 5 ist ersichtlich, daß Querkanten 14 der Rasthaken 10 und Längskanten 15 der Rasthaken 9 abgerundet sind, um eine leichtere Lateralbewegung der Abdeckplatte zu ermöglichen.

Eine weitere Variante der Rasthaken 9 ist aus der Fig. 6 ersichtlich. Dort sind auf der Kontaktfläche der Rasthaken 9 Rippen 16 vorgesehen, die in Lateralrichtung verlaufen. Damit wird einerseits eine leichtere Beweglichkeit der Abdeckkappe in Lateralrichtung, aber eine schwerere Beweglichkeit in Fahrtrichtung erreicht. Bei dieser Variante wird mit noch größerer Sicherheit das Klappern der Abdeckkappe vermieden.

Sofern die Öffnung 5 in der Armaturentafel rechteckig ist und die Abdeckkappe ebenfalls rechteckig ist, bleibt das Einrastverhältnis vor und nach einer Verschiebung unverändert. Ist jedoch eine trapezförmige Abdeckkappe 22 vorgesehen, wie sie in Fig. 7 dargestellt ist, würde sich bei entsprechender Trapezform der Öffnung das Einrastverhältnis verändern. Um das zu vermeiden, sind örtlich parallel zur Lateralrichtung verlaufende Kanten 17, 18, 19, 20, 21 einer Öffnung 23 vorgesehen, die an die Trapezform angenähert sind, d.h., unterschiedlichen Abstand zueinander aufweisen. In einem entsprechend unterschiedlichen Abstand liegen sich abschnittsweise auch die nicht dargestellten Rasthaken gegenüber.

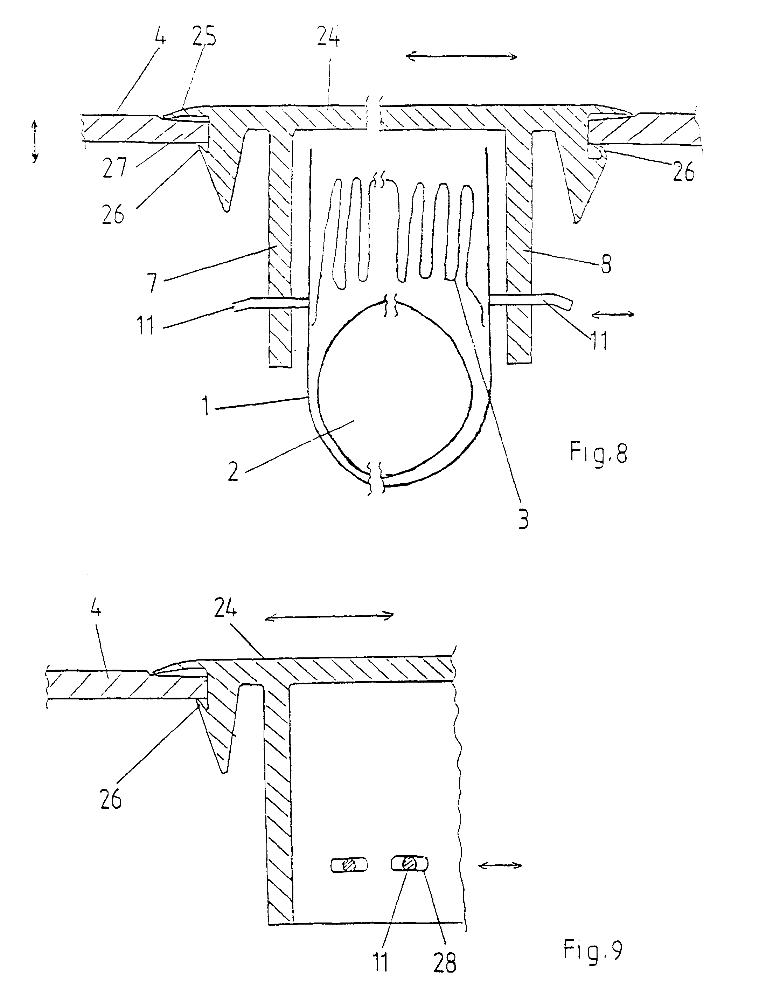

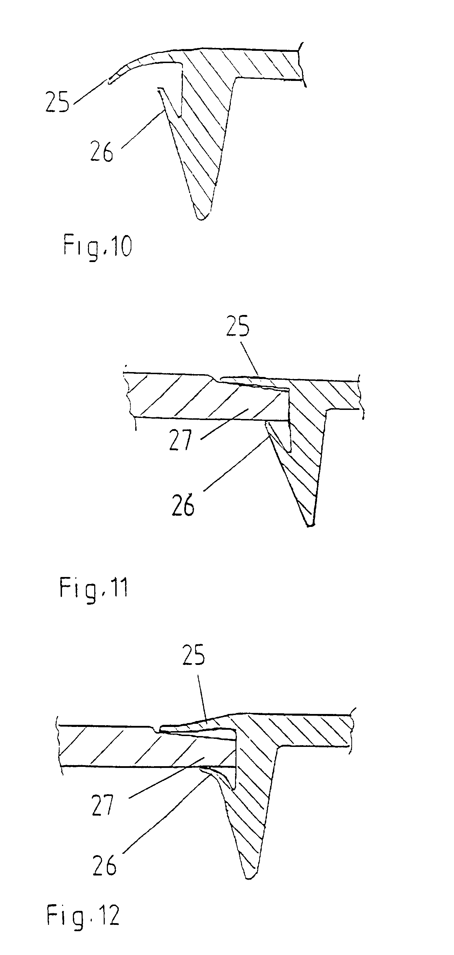

Bei der Ausführungsform der Erfindung gemäß Figuren 8 und 9 weist die Abdeckkappe 24 am Rand umlaufende flexible Zungen 25 auf, denen flexible Haken 26 gegenüberliegen. Durch die spitze, schmale Ausführung der Haken wird gegenüber den Haken der ersten Ausführungsform eine erhöhte Flexibilität erzielt. Diese Zungen und Haken erlauben bei dieser Ausführungsform die senkrechte Relativbewegung der Abdeckkappe gegenüber der Armaturentafel 4. Wie aus der Fig. 10 ersichtlich ist, sind die Zungen 25 nach unten vorgeformt. Dadurch werden umlaufend minimale Höhenunterschiede zwischen der Abdeckkappe und der Armaturentafel erzielt, wie aus der Fig. 11 ersichtlich ist. Die Haken 26 sind zweckmäßig ebenfalls vorgeformt, wie es auf der rechten Seite der Fig. 8 erkennbar ist, um die Unterseite der Armaturentafel stets von unten zu stützen und um die Klapperfreiheit zwischen der Abdeckkappe und der Armaturentafel sicherzustellen. Bei einer senkrechten Relativbewegung nach oben verformen sich die Zungen 25 und Haken 26, wie aus der Fig. 12 ersichtlich ist. Der Rand 27 der Öffnung der Armaturentafel ist an der Oberseite mit einer solchen Vertiefung ausgeführt, daß die Oberkante der Armaturentafel und die Zungenoberkante bündig zueinander liegen, wobei sowohl die Zungen 25 als auch der Rand 27 keilförmig verlaufen.

Die Relativbewegung der Abdeckkappe 24 in der Lateralrichtung und in der Fahrtrichtung gegenüber dem Gehäuse 1 wird durch waagerechte Langlöcher 28 in den Seitenwänden 7, 8 ermöglicht, in die die Bolzen 11 eingreifen.

## Patentansprüche

1. Airbagmodul, insbesondere Beifahrerairbagmodul, mit Modulgehäuse (1) und Abdeckkappe (24) mit mindestens einer Seitenwand (7, 8), wobei die Abdeckkappe (24) ein gesondertes Bauteil darstellt, das auf einem umgebenden Bauteil (4) aufliegt und eine is dem Bauteil (4) vorgesehenen Öffnung (5) verschließt, wobei zwei Einrastmittel (26, 11) angeordnet sind, wobei ein erstes, eine Relativbewegung der Abdeckkappe (24) gegenüber dem umgebenden Bauteil erlaubendes Einrastmittel (26) und ein zweites eine Relativbewegung der Abdeckkappe gegenüber dem Modulgehäuse erlaubendes Einrastmittel (11) vorgesehen sind,
**dadurch gekennzeichnet,**
**daß** die Abdeckkappe (24) am Rand umlautende flexible Zungen (25) aufweist, denen flexible erste Einrastmittel (26) gegenüberliegen, wobei die Abdeckkappe(24), das umgehende Bauteil(4) und die ersten Einrastmittel (26) so ausgebildet sind, daß nach dem Einrasten eine Bewegung der Abdeckkappe (24) nur senkrecht zum umgebenden Bauteil (4) möglich ist und daß die zweiten Einrastmittel (11) und das Modulgehäuse (1) so ausgebildet sind, daß eine Bewegung nach dem Einrasten zwischen der Seitenwand (7, 8) der Abdeckkappe (24) und dem Modulgehäuse (1) nur in der Lateralrichtung und in der Fahrtrichtung möglich ist.

2. Airbagmodul nach mindestens einem der vorhergehenden Ansprüche, **dadurch gekennzeichnet, daß** als erste Einrastmittel elastisch verformbare Rasthaken (9, 10 , **26**) vorgesehen sind, die unter das umgebende Bauteil (4) des Kfz greifen, und daß als zweite Einrastmittel Bolzen (11) am Gehäuse (1) des Airbagmoduls vorgesehen sind, die in Langlöcher (12) in der Seitenwand (7, 8) der Abdeckkappe (6) eingreifen.

3. Airbagmodul nach Anspruch 2, **dadurch gekennzeichnet, daß** Rasthaken (**26**) umlaufend an der Abdeckkappe (6) angeordnet sind und daß der Freiraum zwischen den Rasthaken (**26**) und der Abdeckkappe (**24**) so groß ist, daß diese spielfrei am umgebenden Bauteil (4) des Kfz geführt ist.

4. Airbagmodul nach Anspruch 2 oder 3, **dadurch gekennzeichnet, daß** bei einer Anordnung der Abdeckkappe (**24**) auf der Armaturentafel (4) eines Kfz die Rasthaken (**26**) an den quer zur Fahrtrichtung verlaufenden Seiten der Abdeckkappe (**24**) steifer sind als die Rasthaken an den in Fahrtrichtung verlaufenden Seiten der Abdeckkappe **(24).**

5. Airbagmodul nach mindestens einem der Ansprüche 2 bis 4, **dadurch gekennzeichnet, daß** die Rasthaken (9) angerauhte Kontaktflächen (13) aufweisen.

6. Airbagmodul nach mindestens einem der Ansprüche 2 bis 5, **dadurch gekennzeichnet, daß** die Rasthaken auf den Kontaktflächen (9) Buckel oder Rippen (16) aufweisen.

7. Airbagmodul nach mindestens einem der vorhergehenden Ansprüche, **dadurch gekennzeichnet, daß** bei einer von der Rechteckform abweichenden Abdeckkappe (22) die für den Austritt des Gassacks (3) vorgesehene Öffnung (23) der umgebenden Baugruppe (4) parallel gegenüberliegende Ränder (17 - 21) aufweist, deren Abstand abschnittsweise unterschiedlich ist und denen im entsprechenden Abstand abschnittsweise die Rasthaken gegenüberliegen.

## Claims

1. Airbag module, in particular front-seat passenger airbag module, with a module housing (1) and a cover cap (24) having at least one side wall (7, 8), the cover cap (24) being a separate component which rests on a surrounding component (4) and closes an orifice (5) provided in the component (4), in which two latching means (26, 11) are arranged, there being provided a first latching means (26) allowing a movement of the cover cap (24) relative to the surrounding component and a second latching means (11) allowing a movement of the cover cap relative to the module housing, **characterized in that** the cover cap (24) has, at the edge, peripheral flexible tongues (25), opposite which flexible first latching means (26) are located, the cover cap (24), the surrounding component (4) and the first latching means (26) being designed in such a way that, after the latching, movement of the cover cap (24) is possible only vertically in relation to the surrounding component (4), and **in that** the second latching means (11) and the module housing (1) are designed in such a way that movement, after the latching, between the side wall (7, 8) of the cover cap (24) and the module housing (1) is possible only in the lateral direction and in the direction of travel.

2. Airbag module according to Claim 1, **characterized in that** the first latching means provided are elastically deformable catch hooks (9, 10, 26) which engage under the surrounding component (4) of the motor vehicle, and **in that** the second latching means provided are bolts (11) on the housing (1) of the airbag module which engage into long holes (12) in the side wall (7, 8) of the cover cap (6).

3. Airbag module according to Claim 2, **characterized in that** catch hooks (26) are arranged peripherally on the cover cap (6), and **in that** the size of the free space between the catch hooks (26) and the cover cap (24) is such that the latter is guided, free of play, on the surrounding component (4) of the motor vehicle.

4. Airbag module according to Claim 2 or 3, **characterized in that**, when the cover cap (24) is arranged on the instrument panel (4) of a motor 'vehicle, the catch hooks (26) on the sides of the cover cap (24) which run transversely to the direction of travel are more rigid than the catch hooks on the sides of the cover cap (24) which run in the direction of travel.

5. Airbag module according to at least one of Claims 2 to 4, **characterized in that** the catch hooks (9) have roughened contact faces (13).

6. Airbag module according to at least one of Claims 2 to 5, **characterized in that** the catch hooks have bosses or ribs (16) on the contact faces (9).

7. Airbag module according to at least one of the preceding claims, **characterized in that**, in the case of a cover cap (22) differing from the rectangular shape, the orifice (23) provided in the surrounding subassembly (4) for the emergence of the gas bag (3) has opposite edges (17 - 21) which are parallel to one another and the distance between which is different in places and opposite which the catch hooks are located at the corresponding distance in places.

## Revendications

1. Module d'airbag, en particulier module d'airbag de passager, comprenant un boîtier de module (1) et un capuchon de couverture (24) avec au moins une paroi latérale (7, 8), le capuchon de couverture (24) représentant un composant séparé qui repose sur un composant (4) qui l'entoure et referme une ouverture (5) prévue dans ce composant (4), dans lequel deux organes d'enclenchement (26, 11) sont agencés, un premier organe d'enclenchement (26) étant prévu pour permettre un mouvement relatif du capuchon de couverture (24) par rapport au composant qui l'entoure, et un second organe d'enclenchement (11) étant prévu pour permettre un mouvement relatif du capuchon de couverture par rapport au boîtier de module,
**caractérisé en ce que**
le capuchon de couverture (24) comporte des languettes flexibles (25) en périphérie et à la bordure, auxquelles sont opposés le premier organe d'enclenchement flexible (26), le composant (4) qui entoure et le premier organe d'enclenchement (26) étant ainsi réalisés qu'après l'enclenchement, un mouvement du capuchon de couverture (24) n'est possible que perpendiculairement au composant (4) qui l'entoure, et **en ce que** le second organe d'enclenchement (11) et le boîtier de module (1) sont ainsi réalisés qu'après l'enclenchement entre la paroi latérale (7, 8) du capuchon de couverture (24) et le boîtier de module (1) un mouvement n'est possible que dans la direction latérale et dans la direction de circulation.

2. Module d'airbag selon la revendication précédente, **caractérisé en ce qu'**il est prévu à titre de premier organe d'enclenchement des crochets d'enclenchement élastiquement déformables (9, 10, 26) qui s'engagent par dessous le composant (4) du véhicule qui entoure, et **en ce qu'**il est prévu à titre de second organe d'enclenchement des goujons (11) sur le boîtier (1) du module d'airbag qui s'engagent dans des trous oblongs (12) dans la paroi latérale (7, 8) du capuchon de couverture (6).

3. Module d'airbag selon la revendication 2, **caractérisé en ce que** des crochets d'enclenchement (26) sont agencés à la périphérie sur le capuchon de couverture (6), et **en ce que** l'espace libre entre les crochets d'enclenchement (26) et le capuchon de couverture (24) est si grand que celui-ci est guidé sans jeu sur le composant (4) du véhicule qui l'entoure.

4. Module d'airbag selon l'une ou l'autre des revendications 2 et 3, **caractérisé en ce que** lorsque le capuchon de couverture (24) est agencé sur le tableau de bord (4) d'un véhicule, les crochets d'enclenchement (26) sont plus raides sur les côtés du capuchon de couverture (24) qui s'étend perpendiculairement à la direction de circulation que les crochets d'enclenchement sur les côtés du capuchon de couverture (24) qui s'étendent dans la direction de circulation.

5. Module d'airbag selon l'une au moins des revendications 2 à 4, **caractérisé en ce que** les crochets d'enclenchement (9) présentent des surfaces de contact rugueuses (13).

6. Module d'airbag selon l'une au moins des revendications 2 à 5, **caractérisé en ce que** les crochets d'enclenchement présentent des boucles ou des nervures (16) sur les surfaces de contact (9).

7. Module d'airbag selon l'une au moins des revendications précédentes, **caractérisé en ce que**, dans le cas d'un capuchon de couverture (22) dont la forme diffère d'une forme rectangulaire, l'ouverture (23) prévue pour la sortie du sac à gaz (3) dans le groupe structurel (4) qui entoure, présente des bordures opposées parallèles (17-21) dont la distance diffère localement, et qui sont opposées localement à une distance correspondante aux crochets d'enclenchement.
